# EUROPEAN PATENT SPECIFICATION

(11) **EP 2 939 916 B1**
(45) Date of publication and mention of the grant of the patent: **02.11.2016**
(21) Application number: 13867130.0
(22) Date of filing: 11.12.2013
(51) Int. Cl.: B62M 6/50, B62M 6/60, B62M 6/55

(54) **ELECTRIC BICYCLE**
ELEKTRISCHES FAHRRAD
BICYCLETTE ÉLECTRIQUE

(30) Priority: 28.12.2012 JP 2012286416
(43) Date of publication of application: 04.11.2015
(73) Proprietor: Panasonic Intellectual Property Management Co., Ltd., Osaka-shi, Osaka 540-6207 (JP)
(72) Inventor: KAWAKAMI, Masafumi, Osaka-shi Osaka 540-6207 (JP); YAMAMOTO, Tatsuaki, Osaka-shi Osaka 540-6207 (JP)
(74) Representative: Grünecker Patent- und Rechtsanwälte PartG mbB
(86) International application number: PCT/JP2013/007272
(87) International publication number: WO 2014/103212

(56) References cited:
- DE-A1-102010 050 585
- JP-A- H08 297 059
- JP-A- H09 240 568
- JP-B1- 5 100 920
- JP-B1- 5 100 920
- US-A1- 2012 234 108

## Description

### Technical Field

The present invention relates to an electric bicycle that can be driven by an auxiliary driving force generated by an electric motor in addition to a human driving force generated by a pedal force from a pedal, as in JP 5100920B1 corresponding to the preamble of claim 1.

### Background Art

A known electric bicycle includes a power storage such as a battery and an electric motor powered by the power storage. Such an electric bicycle can be easily driven even on an uphill road by adding an auxiliary driving force (assist force) of the electric motor to a pedal force (human driving force) from a pedal. In such an electric bicycle, a force corresponding to a pedal force applied to the pedal is detected by a torque sensor, and then an auxiliary driving force corresponding to the pedal force is generated from the electric motor.

In this case, as a method of detecting a force corresponding to a pedal force (human driving force) by means of the torque sensor, the torque sensor is disposed near, for example, a crankshaft to detect a force transmitted from the crankshaft to a crank gear (also called a front sprocket or a crank gear) by means of the torque sensor, or the torque sensor is disposed in the hub of a rear wheel to detect a force transmitted to the rear wheel through a chain by means of the torque sensor.

In the method of detecting a force transmitted to the rear wheel through the chain, however, the torque sensor detects the force through a force transmission path such as a chain. This may change or lose the direction or amount of a force through the force transmission path such as a chain, preventing the direct measurement of a force to the pedal so as to reduce correspondence with a pedal force.

In contrast, in the method of detecting a force transmitted from the crankshaft to the crank gear, the torque sensor does not detect the force through the transmission path such as a chain. Thus, a pedal force can be measured in a relatively satisfactory manner.

If a force transmitted from the crankshaft to the crank gear is detected by the torque sensor, conventionally, a motor unit containing an electric motor via a bracket is disposed below, for example, a hanger (also called a bottom bracket) that connects a lower pipe (also called a main pipe), a vertical pipe (also called a seat tube), and a chain stay. The torque sensor is disposed at the front of the motor unit. Specifically, the crankshaft is rotationally supported at the front of the motor unit disposed below the hanger, a torque detecting cylinder that transmits the rotation of the crankshaft to the crank gear is disposed around the crankshaft coaxially with the crankshaft, and the torque sensor is attached to the torque detecting cylinder (Patent Literature 1, etc.).

In a typical bicycle, however, the crankshaft is rotatably supported at the location of the hanger. Thus, a structure in which a crank is supported by the motor unit disposed below the hanger is a frame structure that is different from that of a typical bicycle, disadvantageously leading to uncomfortable feeling and higher manufacturing cost. Moreover, in order to set the crankshaft as high as that of a typical bicycle from the ground, the hanger connected to the lower pipe and so on needs to be disposed in the upper part of the bicycle, leading to the need for locating the lower pipe as well in the upper part of the bicycle. This disadvantageously makes it difficult for a rider to move a foot over the lower pipe when the rider rides on or gets. off the electric bicycle.

In order to overcome the drawbacks, in electric bicycles disclosed in Patent Literatures 2 and 3 and so on, a crankshaft is rotatably supported at the location of a hanger as in a typical bicycle, the hanger containing a torque sensor. With this configuration, the frame structure of the electric bicycle is similar to that of a typical bicycle, thereby suppressing uncomfortable feeling and an increase in manufacturing cost to a certain level. Moreover, the hanger and a lower pipe are located as in a typical bicycle, allowing a rider to easily move a foot over the lower pipe.

If the component of the torque sensor is disposed on the outer surface of the crankshaft, a torque from a left or right pedal may be unevenly applied. Moreover, a weight applied to the left or right pedal presses the end of the crankshaft downward. This may cause considerable influence of a force of bending the crankshaft downward as well as a torque in a rotation direction with respect to the crankshaft. Thus, generally, the crankshaft and a torque detection cylinder disposed on the outer surface of the crankshaft are engaged with each other via an engaging portion, e.g., a serration part so as to dispose the component of the torque sensor on the outer surface of the torque detection cylinder. The crankshaft and the torque detection cylinder are engaged with each other near the location of a rotatably supporting bearing (location adjacent to the bearing) away from a crank gear on the crankshaft.

In this configuration, the component of the torque sensor is disposed on the torque detection cylinder, instead of the crankshaft, provided on the outer surface of the crankshaft. Thus, the influence of a force of bending the crankshaft downward is less considerable than that of the component of the torque sensor provided on the outer surface of the crankshaft.

### Citation List

### Patent Literature

Patent Literature 1: Japanese Patent Laid-Open No. 2003-118673
Patent Literature 2: Japanese Patent Laid-Open No. 8-297059
Patent Literature 3: Japanese Patent Laid-Open No. 2007-230410

### Summary of Invention

### Technical Problem

However, even if the component of the torque sensor is disposed on the torque detection cylinder provided on the outer surface of the crankshaft, the crankshaft receives a large bending moment near the bearing and thus the bending moment may affect the torque detection cylinder engaged near the location of the large bending moment applied to the crankshaft. If the crankshaft, a human power transmission shaft, and the torque sensor are disposed in the hanger, the crankshaft cannot be considerably increased in diameter according to the diameter of the hanger. This may increase the influence of the bending moment.

Since the hanger has a limited internal space, the crankshaft and the torque detection cylinder engaged with each other near the bearing may cause interference between the outer surface of the bearing and the connected point of the wiring part of the torque sensor including the component disposed on the torque detection cylinder. Thus, the wiring part of the torque sensor may not be properly removed.

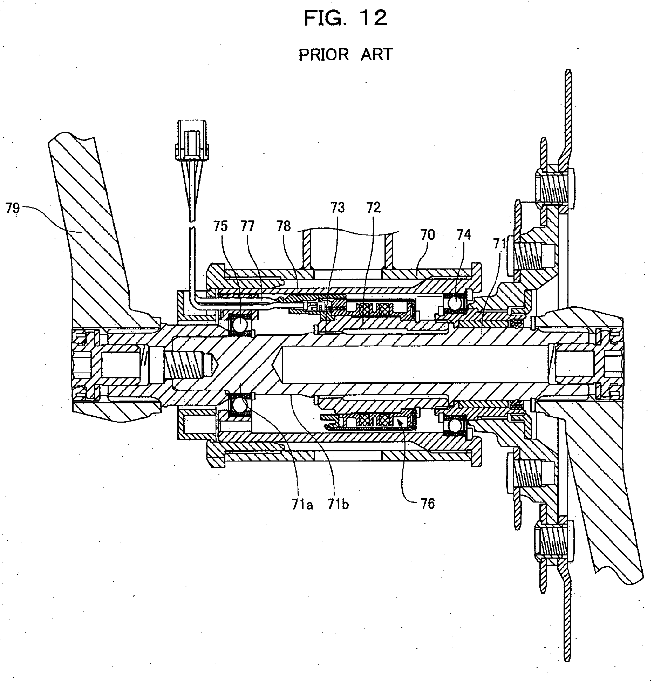

As a method for addressing these problems, as shown in FIG. 12, an engaging portion (serration part) 73 between a crankshaft 71 and a torque detection cylinder 72 may be disposed near the intermediate portion between bearings 74 and 75 that rotatably support the crankshaft 71.

With this configuration, the engaging portion 73 between the crankshaft 71 and the torque detection cylinder 72 having the component (magnetostriction portion) of a torque sensor 76 can be separated away from the bearings 74 and 75, thereby minimizing the influence of a bending moment applied to the crankshaft 71. Moreover, a wiring part 77 and a wiring junction 78 of the torque sensor 76 can be properly disposed using a space between the torque detection cylinder 72 and the bearing 75.

In the structure of FIG. 12, however, the crankshaft 71 is disposed together with the torque detection cylinder 72 and the torque sensor 76 in a hanger 70 while the torque detection cylinder 72 is fit onto the outer surface of the crankshaft 71 from one side of the crankshaft 71 (the end of a side supported by the bearing 75, the left side of the crankshaft 71 in FIG. 12) and is inserted into the bearing 75. Thus, the crankshaft 71, particularly a portion 71a inserted into the bearing 75 of the crankshaft 71 or a portion 71b near the torque detection cylinder 72 inserted during assembly cannot be considerably increased in diameter.

Thus, for example, in the case of insufficient positioning in the axial direction of the bearing 75, a large force applied downward from a crank arm 79 attached to the small-diameter side of the crankshaft 71 moves (slides) the bearing 75 in the axial direction relative to the crankshaft 71, applying a large bending moment. This may cause damage or deformation on the portion (unsupported portion) 71a supported by the bearing 75 on the crankshaft 71. Moreover, the portion 71b between the portion (supported portion) 71a supported by the bearing 75 on the crankshaft 71 and the engaging portion 73 having the serration part is shaped like a round bar that is not larger in diameter than the small-diameter portion of the serration part. Thus, the portion 71b may be damaged or deformed by, for example, a large force applied downward from the crank arm 79.

The present invention has been devised to solve the problems. An object of the present invention is to provide an electric bicycle that can properly detect a human driving force as a rotary force according to a pedal force from a pedal and prevent damage and deformation of a crankshaft in a structure including the crankshaft, a torque detection cylinder, and a torque sensor that are disposed in a hanger.

### Solution to Problem

In order to solve the problems, the present invention, in accordance with claim 1, discloses an electric bicycle that can be driven by adding an auxiliary driving force generated by an electric motor to a human driving force generated by a pedal force from a pedal, the electric bicycle including: a crankshaft; and a torque detection cylinder that is engaged with the crankshaft so as to receive a transmitted human driving force and has a magnetostriction portion of a torque sensor on the periphery of the torque detection cylinder, the crankshaft and the torque detection cylinder being contained in a hanger connected to the lower end of a seat tube, wherein an engaging portion between the crankshaft and the torque detection cylinder is disposed at the intermediate portion between a first bearing near a crank gear that rotatably supports the crankshaft and a second bearing opposite to the crank gear, a tubular member is fit onto a point between a portion supported by the second bearing on the crankshaft and the engaging portion or a serration extended portion is formed by axially extending a serration part constituting the engaging portion, and one of the tubular member and the serration extended portion is brought into contact with the second bearing and regulates an axial movement of the second bearing to the engaging portion.

With this configuration, the position of the second bearing is regulated by the tubular member or the serration extended portion, preventing an axial movement of the second bearing. Between the engaging portion and the portion supported by the second bearing on the crankshaft, the tubular member is fit onto the crankshaft or the serration extended portion is formed, thereby increasing bending strength.

According to the present invention, the crankshaft is divided into a crankshaft body on the periphery of which the torque sensor is disposed, and an auxiliary crankshaft connected to one side of the crankshaft body, and a joining section between the auxiliary crankshaft and a crank arm and a joining section between the crankshaft body and the crank arm are larger in diameter than a connecting section between the crankshaft body and the auxiliary crankshaft. This configuration increases the diameter of the joining section between the auxiliary crankshaft and the crank arm of the crankshaft body, thereby keeping high stiffness.

According to the present invention, the hanger contains a metallic inner cylinder having the first and second bearings in the left and right ends of the inner cylinder, and the inner cylinder covers the torque sensor, the torque detection cylinder on the periphery of which the magnetostriction portion of the torque sensor is formed, and a region between the two bearings on the crankshaft.

With this configuration, even if rainwater enters the hanger through the seat tube, the inner cylinder prevents rainwater from entering the location of the torque sensor. Moreover, the metallic inner cylinder can prevent external noise or the like from entering the signal lines of the torque sensor. Furthermore, the locations of the crankshaft and the torque sensor can be combined into a unit covered with the inner cylinder and thus the crankshaft and the torque sensor can be relatively easily assembled into the hanger with high efficiency.

The present invention further includes an auxiliary cylinder fit into one side of the hanger, wherein the end of the inner cylinder is fit into the auxiliary cylinder, and an annular elastic member is disposed between the auxiliary cylinder and the inner cylinder.

With this configuration, even if a frame including the hanger is formed with low accuracy, the elastic member automatically adjusts the position of the inner cylinder so as to prevent the inner cylinder from strongly coming into contact with the torque sensor and adversely affecting the torque sensor. Even if rainwater enters the hanger through the seat tube and then flows into the inner cylinder from the end of the inner cylinder through a gap between the auxiliary cylinder and the inner cylinder, the elastic member blocks the flow of rainwater.

### Advantageous Effects of Invention

According to the present invention, between the engaging portion and the portion supported by the second bearing on the crankshaft, the tubular member is fit onto the crankshaft or the serration extended portion is formed, regulating an axial movement of the second bearing to the engaging portion by the tubular member or the serration extended portion. This can prevent the second bearing from moving in the axial direction. Thus, this configuration can prevent a large force applied downward to the end of the crankshaft from causing damage or deformation on the portion supported by the second bearing on the crankshaft, achieving higher reliability. Between the engaging portion and the portion supported by the second bearing on the crankshaft, the tubular member is fit onto the crankshaft or the serration extended portion is formed, thereby increasing bending strength. Thus, even if a large force is applied downward to the end of the crankshaft, this configuration can prevent damage and deformation between the engaging portion and the portion supported by the second bearing on the crankshaft, achieving higher reliability.

The crankshaft is divided into the crankshaft body on the periphery of which the torque sensor is disposed, and the auxiliary crankshaft connected to the one side of the crankshaft body, and the diameter of the joining section between the auxiliary crankshaft arid the crank arm and the diameter of the joining section between the crankshaft body and the crank arm are larger than the diameter of the connecting section between the crankshaft body and the auxiliary crankshaft. This increases the diameter of the joining section between the auxiliary crankshaft and the crank arm of the crankshaft body, thereby keeping high stiffness on the joining section. Additionally, the reliability of the electric bicycle can be improved. Furthermore, the joining section between the auxiliary crankshaft and the crank arm can be increased in diameter; meanwhile, the crankshaft body is identical in diameter to a conventional crankshaft, allowing the torque sensor to have the same size and shape as a conventional torque sensor. The crankshaft, the torque sensor, and the hanger can have small sizes (suppressed size increase). The use of a conventional torque sensor can reduce manufacturing cost.

Moreover, the hanger contains the metallic inner cylinder having the first and second bearings provided in the left and right ends of the inner cylinder, and the inner cylinder covers the torque sensor, the torque detection cylinder on the periphery of which the magnetostriction portion of the torque sensor is formed, and the region between the two bearings on the crankshaft. With this configuration, even if rainwater enters the hanger through the seat tube, the inner cylinder prevents rainwater from entering the location of the torque sensor, improving reliability. Moreover, the metallic inner cylinder can prevent external noise or the like from entering the signal lines of the torque sensor, also improving reliability. Furthermore, the locations of the crankshaft and the torque sensor can be combined into a unit covered with the inner cylinder and thus the crankshaft and the torque sensor can be relatively easily assembled into the hanger with high efficiency.

Furthermore, the auxiliary cylinder is fit into the one side of the hanger, the end of the inner cylinder is fit into the auxiliary cylinder, and the annular elastic member is disposed between the auxiliary cylinder and the inner cylinder. With this configuration, even if the frame including the hanger is formed with low accuracy, the elastic member automatically adjusts the position of the inner cylinder so as to prevent the inner cylinder from strongly coming into contact with the torque sensor and adversely affecting the torque sensor, improving reliability. Even if rainwater enters the hanger through the seat tube and then flows into the inner cylinder from the end of the inner cylinder through the gap between the auxiliary cylinder and the inner cylinder, the elastic member blocks the flow of rainwater.

### Brief Description of Drawings

[FIG. 1] FIG. 1 is an overall side view of an electric bicycle according to an embodiment of the present invention.
[FIG. 2] FIG. 2 is a partially cut side view of the electric bicycle.
[FIG. 3] FIG. 3 is an exploded perspective view of a hanger and a crank unit in the electric bicycle.
[FIG. 4] FIG. 4 is a longitudinal section of the hanger of the electric bicycle and a portion near the hanger.
[FIG. 5] FIG. 5 is a cross-sectional side view of the electric bicycle taken along the arrows v-v of FIG. 4.
[FIG. 6] FIG. 6 is a cross-sectional side view of the electric bicycle taken along the arrows VI-VI of FIG. 4.
[FIG. 7] FIG. 7 is a perspective view showing the crankshaft and the tubular member of the electric bicycle.
[FIG. 8] FIG. 8 is an explanatory drawing showing a bending moment applied to the crankshaft of the electric bicycle.
[FIG. 9] FIG. 9 is an enlarged view showing the principal part of the engaging portion of the electric bicycle.
[FIG. 10] FIG. 10 is a longitudinal section showing the hanger of an electric bicycle and a location near the hanger according to another embodiment of the present invention.
[FIG. 11] FIG. 11 is a longitudinal section showing the hanger of an electric bicycle and a location near the hanger according to still another embodiment of the present invention.
[FIG. 12] FIG. 12 is a longitudinal section showing the hanger and a location near the hanger of a conventional electric bicycle.

### Description of Embodiments

An electric bicycle according to an embodiment of the present invention will be described below with reference to the accompanying drawings. In the explanation, a lateral direction is a direction set with respect to a traveling direction.

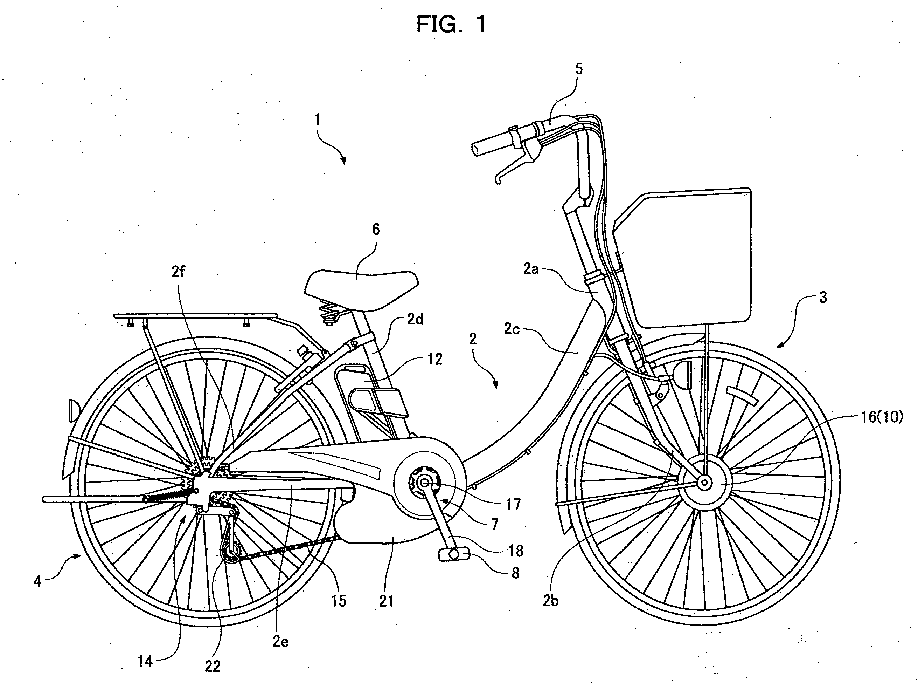

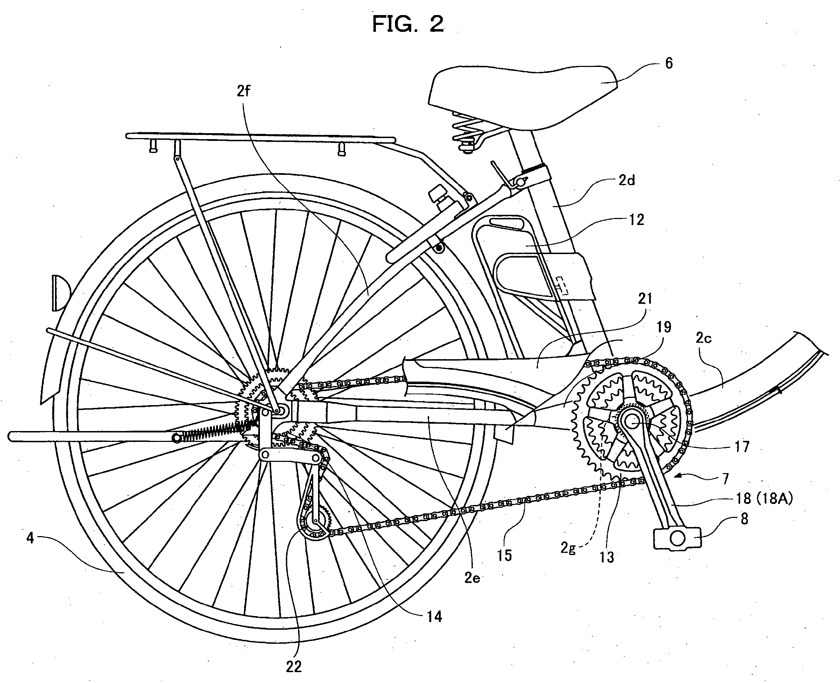

In FIGS. 1 and 2, reference numeral 1 denotes an electric bicycle. The electric bicycle 1 includes a metallic frame (also called a body frame) 2 composed of a head tube 2a, a front fork 2b, a down tube (also called a down tube 2c) 2c, a vertical pipe (also called a seat tube) 2d, a chain stay 2e, a seat stay 2f, and a hanger (also called a bottom bracket) 2g, a front wheel 3 rotatably attached to the lower end of the front fork 2b, a rear wheel 4 rotatably attached to the rear end of the chain stay 2e, a handle bar 5 that changes the directions of the front wheel 3, a saddle 6, a crank 7 composed of a crankshaft 17 and a pair of crank arms 18, pedals 8 rotatably attached to the ends of the crank arms 18, an electric motor 10 that generates an auxiliary driving force (assist force), a control unit (not shown) that electrically controls the electric motor 10 in various ways, a battery 12 composed of a secondary battery that supplies driving power to the electric motor 10, a manual operation part (not shown) that is attached to, for example, the handle bar 5 so as to be operated by a rider, a crank gear (also called a front sprocket or a chain ring) 13 attached to a location on one side of the crank 7 so as to integrally rotate with the crank 7 (precisely, the crank 7 and a torque detection cylinder 24 or a rotary-force transmission cylinder 27, which will be described later), a rear sprocket (so-called rear wheel gear) 14 serving as a rear wheel attached to the hub (also called a rear hub) of the rear wheel 4, a chain 15 serving as an endless driving force transmitting member looped over the crank gear 13 and the rear sprocket 14, and a chain cover 21 laterally covering the chain 15 and so on. In the present embodiment, the electric motor 10 is disposed in a hub (also called a front hub) 16 of the front wheel 3 while the control unit (not shown) is disposed near the attaching part of the battery 12. The control unit (not shown) may be disposed at another location of the manual operation part. The battery 12 is an example of a storage device. A secondary battery is preferably used but another example of the storage device may be a capacitor. The electric motor 10 may be disposed in the rear hub instead of the front hub 16.

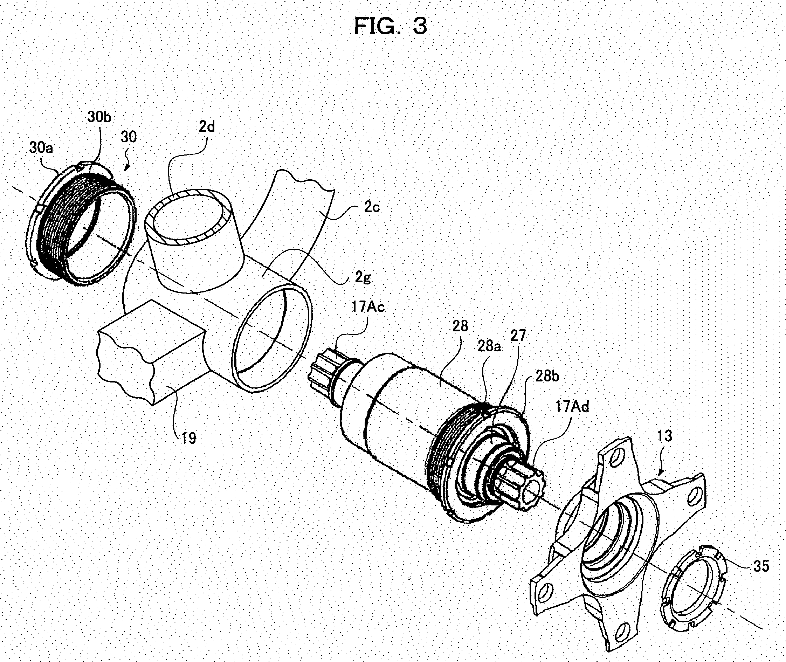

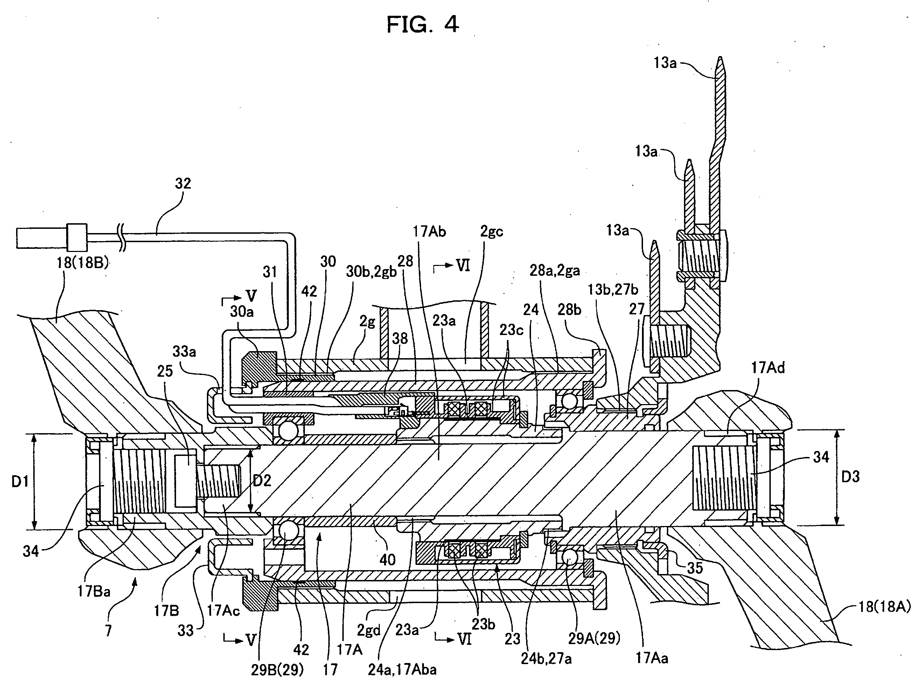

As shown in FIGS. 2 and 3, the hanger 2g is provided so as to connect the rear end of the down tube 2c, the lower end of the vertical pipe 2d, and a battery-mounting bracket 19 connected to the front end of the chain stay 2e. As shown in FIGS. 3 and 4, the crankshaft 17 is rotatably disposed in the hanger 2g and a torque sensor 23 for detecting a force corresponding to a pedal force (human driving force) is disposed in the hanger 2g. FIG. 3 only shows a part supporting a gear portion 13a on the crank gear 13. The gear portion 13a is also called a spider.

As shown in FIG. 4, the crankshaft 17 is divided into a crankshaft body 17A on the periphery of which the torque sensor 23 is provided, and an auxiliary crankshaft 17B connected to one side (the left side in the present embodiment) of the crankshaft body 17A. The crankshaft body 17A and the auxiliary crankshaft 17B are connected to each other with a coupling stud 25. The crankshaft body 17A includes a large-diameter part 17Aa that is located on the right side so as to be coupled to the right crank arm 18(18A) and a small-diameter part 17Ab that has a smaller diameter than the large-diameter part 17Aa and is located at the center and on the left side. Furthermore, the torque detection cylinder (sensing pipe) 24 on the periphery of which a magnetostriction portion 23a of the torque sensor 23 is formed is fit onto the small-diameter part 17Ab of the crankshaft body 17A so as to integrally rotate with the small-diameter part 17Ab that is located substantially at the center part of the crankshaft 17 in a lateral direction. Moreover, the left end of the small-diameter part 17Ab of the crankshaft body 17A is connected to the auxiliary crankshaft 17B. A joining section 17Ba between the auxiliary crankshaft 17B and the left crank arm 18(18B) has a diameter D1 that is larger than a diameter D2 of a connecting section (a part of the small-diameter part 17Ab) 17Ac between the crankshaft body 17A and the auxiliary crankshaft 17B. Furthermore, a joining section 17Ad between the crankshaft body 17A and the right crank arm 18(18A) has a diameter D3 that is larger than the diameter D2 of the connecting section (a part of the small-diameter part 17Ab) 17Ac between the crankshaft body 17A and the auxiliary crankshaft 17B. In FIG. 4, reference numeral 34 denotes a locking bolt that locks the crank arm to the crankshaft 17, and reference numerals 2gc and 2gd denote holes that are formed to discharge rainwater or the like entering from the vertical pipe 2d, to the outside (downward).

The torque detection cylinder (sensing pipe) 24 is fit onto the crankshaft 17 so as to integrally rotate with the crankshaft 17 such that an engaging portion 24a including a toothed serration part formed in one end of the torque detection cylinder 24 is engaged with an engaging portion 17Aba including a toothed serration part formed on the outer surface of the small-diameter part 17Ab of the crankshaft body 17A, the engaging portion 17Aba being disposed near the intermediate portion between a first bearing 29A near the crank gear and a second bearing 29B near a counter crank gear on the crankshaft 17. As shown in FIG. 4, the rotary force transmission cylinder 27 is rotatably fit onto the large-diameter part 17Aa of the crankshaft 17. The rotary force transmission cylinder 27 has a toothed engaging portion (serration part) 27a on the inner surface of the left end. The toothed engaging portion (serration part) 27a of the rotary force transmission cylinder 27 is engaged with a toothed engaging portion (serration part) 24b formed on the outer surface of the right end of the torque detection cylinder 24. This transmits the rotation of the torque detection cylinder 24 to the rotary force transmission cylinder 27, integrally rotating the rotary force transmission cylinder 27 with the torque detection cylinder 24.

As shown in FIG. 4, a part of the periphery of the torque detection cylinder 24 has the magnetostriction portion 23a that fluctuates in magnetic permeability in response to the application of a pedal force transmitted to the torque detection cylinder 24 through the crankshaft 17 and a search coil 23b that reads a change of magnetic permeability as a change of magnetic flux with a small clearance from the magnetostriction portion 23a. The magnetostriction portion 23a and the search coil 23b constitute the torque sensor 23 that detects a pedal force based on the torsional force of the torque detection cylinder 24. The search coil 23b and a coil holder 23c that holds the search coil 23b are fit onto the torque detection cylinder 24 so as to rotate with respect to the torque detection cylinder 24.

In the present embodiment, the crank gear 13 and the rear sprocket 14 each include a three-speed transmission gear. The crank gear 13 has gear portions 13a that are mounted with large, medium, and small diameters. Moreover, a derailleur 22 (FIGS. 1 and 2 show only the derailleur 22 on the rear wheel) changes the position of the chain 15 so as to change gears. In this case, the crank gear 13 is fit onto the rotary force transmission cylinder 27 so as to integrally rotate with the rotary force transmission cylinder 27. Moreover, toothed engaging portions (serration parts) 13b and 27b are respectively formed on the inner surface of the crank gear 13 (the inner surface of the spider) and a point on the right side of the outer surface of the rotary force transmission cylinder 27. The toothed engaging portions (serration parts) 13b and 27b are engaged with each other, transmitting the rotation of the rotary force transmission cylinder 27 to the crank gear 13 so as to integrally rotate the crank gear 13 with the rotary force transmission cylinder 27.

The hanger 2 contains a screwed metallic inner cylinder 28. The inner cylinder 28 holds left and right bearings 29 (29A, 29B) from the outside.

The first bearing 29A on the right side, that is, near a place where the crank gear 13 is disposed (crank gear side) is fixed so as to be mounted between the inner surface of the right end of the inner cylinder 28 and the outer surface of the left end of the rotary force transmission cylinder 27. Moreover, the second bearing 29B disposed on the left side, that is, opposite the place where to the crank gear 13 is disposed (counter crank gear side) is fixed such that the inner surface of the second bearing 29B is mounted near the connecting section to the auxiliary crankshaft 17B on the small-diameter part 17Ab of the crankshaft body 17A while the inner surface of the small-diameter left end of the inner cylinder 28 is mounted on the outer surface of the second bearing 29B. The bearings 29 (29A, 29B) each have a sealing part (omitted in FIG. 4) on the side of the bearing. This prevents water or the like from entering the mounting space of the torque sensor 23 through, for example, the mounting space of the ball portion of the bearing 29.

Moreover, an external thread 28a continuing to a flange 28b is formed on the outer surface on the right end of the inner cylinder 28 so as to be screwed into an internal thread 2ga formed on the inner surface of the right end of the hanger 2g. The left end of the inner cylinder 28 is inserted and attached into the left end of the hanger 2g via an auxiliary cylinder 30. Specifically, an external thread 30b formed continuing to a flange 30a of the auxiliary cylinder 30 is screwed and attached into an internal thread 2gb formed on the inner surface of the left end of the hanger 2g. In a state in which the inner cylinder 28 and the auxiliary cylinder 30 are attached to the hanger 2g, the inner cylinder 28 covers the torque sensor 23, the torque detection cylinder 24, and a region on the crankshaft body 17A between the bearings 29. In the present embodiment, an annular groove is formed on the inner surface of the auxiliary cylinder 30 and an annular elastic member 42 in contact with the outer surface of the inner cylinder 28 is disposed in the groove. The groove on the auxiliary cylinder 30 may be replaced with a groove on the outer surface of the inner cylinder 28 with the elastic member 42 disposed in the groove. The elastic member 42 may be brought into contact with the inner surface of the auxiliary cylinder 30.

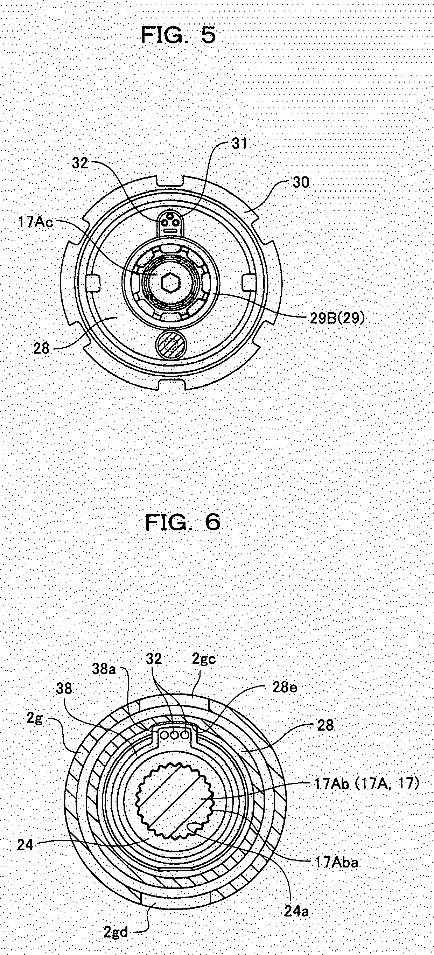

The left end of the inner cylinder 28 is radially extended from a contact point with the inner surface of the auxiliary cylinder 30 to a contact point with the outer surface of the second bearing 29B. As shown in FIG. 5, the inner cylinder 28 has a radially extended side part that is partially cut such that a wire guide member 31 is disposed between the second bearing 29B and an inner surface on the outer periphery of the left end of the inner cylinder 28. The wire guide member 31 is made of an elastic material such as rubber. Torque sensor connecting wires 32 connected to the torque sensor 23 penetrate the wire guide member 31 and pass through the side of the wire guide member 31 to the outside of the hanger 2g. A wire cap 33 circular in side view is provided at a position facing the left side of the inner cylinder 28. Moreover, the wire cap 33 covers a portion where the torque sensor connecting wires 32 protrude from the side of the hanger 2g. The outer surface of the wire cap 33 has a partially cut portion. The torque sensor connecting wires 32 are extended out of a cut portion 33a of the wire cap 33.

Moreover, a terminal holder 38 that holds the torque sensor connecting terminal (torque sensor joining portion) of the torque sensor connecting wire 32 is connected to the coil holder 23c of the torque sensor 23. As shown in FIG. 6, the terminal holder 38 has an annular shape with a protrusion 38a provided in the circumferential direction (in the present embodiment, the upper part of FIG. 6). The terminal holder 38 is connected to the coil holder 23c in a state in which the protrusion 38a is located in a recess 28e formed on the upper end of the inner cylinder 28. Specifically, the search coil 23b and the coil holder 23c of the torque sensor 23 are attached with a small clearance between the search coil 23b and the magnetostriction portion 23a formed on the outer surface of the torque detection cylinder 24. If the search coil 23b and the coil holder 23c of the torque sensor 23 rotate with the torque detection cylinder 24, the protrusion 38a of the terminal holder 38 comes into contact with the inner wall surface of the recess 28e of the inner cylinder 28, regulating the positions of the search coil 23b and the coil holder 23c of the torque sensor 23 in the circumferential direction.

In the present embodiment, the crank gear 13 acting as a human driving force output ring having the gear portions 13a for gear shifting is fit onto the rotary force transmission cylinder 27 such that the position of the crank gear 13 is regulated so as not to move into the hanger 2g in the axial direction of the crankshaft 17. Moreover, the crank gear 13 is attached with an attaching ring 35 screwed into the outer surface of the left end of the crank gear 13 such that the position of the crank gear 13 is regulated so as not to move outward in the axial direction of the crankshaft 17.

As shown in FIG. 4, the crankshaft 17 and the torque sensor 23 are assembled into a unit in the inner cylinder 28. The assembled crank unit is installed in the hanger 2g.

In addition to this configuration, as shown in FIG. 4, a metallic tubular member 40 having sufficient strength is fit onto a point between a portion supported by the second bearing 29B on the crankshaft 17 and the engaging portion 17Aba. One end of the tubular member 40 (the right end in FIG. 4) is in contact with the one end of the torque detection cylinder 24 (the left end in FIG. 4) while another end of the tubular member 40 (the right end in FIG. 4) is in contact with one end face of the second bearing 29B (the right end face in FIG. 4). Thus, the tubular member 40 regulates an axial movement of the second bearing 29B to the engaging portion 17Aba (near the crank gear 13, the right side in FIG. 4). In the present embodiment, the one end face of the second bearing 29B (the right end face in FIG. 4) is in contact with an end of the auxiliary crankshaft 17B (the right end in FIG. 4), regulating an axial movement of the second bearing 29B opposite to the crank gear 13 (the left side in FIG. 4).

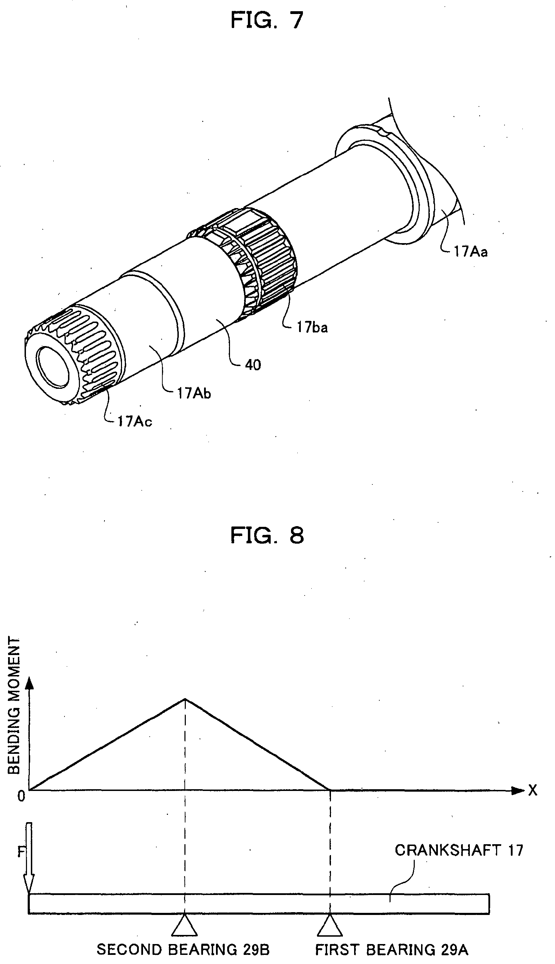

According to this configuration, as shown in FIG. 4, the engaging portions (serration portions) 17Aba and 24a between the crankshaft 17 and the torque detection cylinder 24 are disposed near the intermediate point between the bearings 29A and 29B that rotatably support the crankshaft 17. Thus, the engaging portions 17Aba and 24a between the crankshaft 17 and the torque detection cylinder 24 having the component (magnetostriction portion 23a) of the torque sensor 23 can be separated from the first bearing 29A and the second bearing 29B, thereby minimizing the influence of a bending moment applied to the crankshaft 17. Specifically, as schematically illustrated in FIG. 8, when a pedal force to, for example, the left pedal 8, applies a downward force, a bending moment increases, as a distance from the second bearing 29B decreases on the crankshaft 17. However, the engaging portions 17Aba and 24a between the torque detection cylinder 24 and the crankshaft 17 can be separated from the second bearing 29B, thereby minimizing the influence of a bending moment applied to the crankshaft 17. Likewise, the engaging portions 17Aba and 24a between the torque detection cylinder 24 and the crankshaft 17 are also separated from the second bearing 29B. Thus, also when a pedal force to the right pedal 8 applies a downward force, the influence of a bending moment applied to the crankshaft 17 can be minimized. Moreover, the torque sensor connecting wires 32 or torque sensor connecting terminals (torque sensor joining portions) can be properly disposed using a space between the torque detection cylinder 24 and the second bearing 29B.

According to this configuration, as shown in FIG. 4, the tubular member 40 is fit onto the point between the portion supported by the second bearing 29B on the crankshaft 17 and the engaging portion 17Aba with the torque detection cylinder 24, and the tubular member 40 regulates the position of the second bearing 29B. This configuration does not move the second bearing 29B along the axial direction. Thus, even when a pedal force causes a large force downward to the end of the crankshaft 17, this configuration can prevent damage and deformation on the portion supported by the second bearing 29B on the crankshaft 17, achieving higher reliability.

Furthermore, bending strength or the like is increased by the tubular member 40 fit onto the point between the portion supported by the second bearing 29B on the crankshaft 17 and the engaging portion 17Aba. Thus, even when a large force is applied downward to the end of the crankshaft 17, this configuration can prevent damage and deformation on the point between the portion supported by the second bearing 29B on the crankshaft 17 and the engaging portion 17Aba, achieving higher reliability.

In the present embodiment, an equal diameter can be set without forming any steps on the portion supported by the second bearing 29B and the point onto which the tubular member 40 is fit on the crankshaft 17. This configuration can prevent a stress concentration caused by a bending moment at a step, achieving higher reliability.

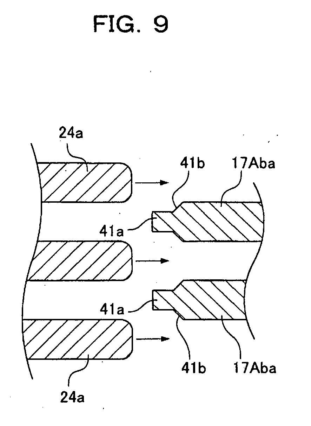

As schematically illustrated in FIG. 9, in order to easily fit the engaging portions 17Aba and 24a at the time of engagement, a narrow portion 41a having a smaller width than the engaging portions 17Aba and 24a and inclined portions 41b extending on two sides of the narrow portion 41a may be formed on at least one of the engaging portions 17Aba and 24a that engage the crankshaft 17 and the torque detection cylinder 24. With this configuration, the crankshaft 17 and the torque detection cylinder 24 can be easily and efficiently engaged with each other (the insertion of the torque detection cylinder 24 into the crankshaft 17).

In this configuration, the crankshaft 17 is divided into the crankshaft body 17A on the periphery of which the torque sensor 23 is provided, and the auxiliary crankshaft 17B connected to the one side of the crankshaft body 17A. The diameter D1 of the joining section between the auxiliary crankshaft 17B and the crank arm 18B and the diameter D3 of the joining section 17Ad between the crankshaft body 17A and the right crank arm 18(18A) are larger than the diameter D2 of the connecting section between the crankshaft body 17A and the auxiliary crankshaft 17B. The joining sections between the auxiliary crankshaft 17B, the crankshaft body 17A, and the crank arms 18B and 18A can be increased in diameter, thereby keeping high stiffness. The joining section 17Ad between the crankshaft body 17A and the right crank arm 18(18A) is substantially identical in diameter to the large-diameter part 17Aa of the crankshaft body 17A. This can keep high stiffness for the joining section.

Since the crankshaft 17 is divided into the crankshaft body 17A and the auxiliary crankshaft 17B, even after the torque sensor 23 is attached to the small-diameter part of the crankshaft body 17A, the auxiliary crankshaft 17B is connected to the crankshaft body 17A so as to easily install the crankshaft 17 and the torque sensor 23 into the hanger 2g.

Moreover, the small-diameter part 17Ab having the attached torque sensor 23 on the crankshaft body 17A is identical in diameter to that of a conventional crankshaft. The torque sensor 23 may be identical in size or shape to a conventional torque sensor. Thus, the crankshaft 17, the torque sensor 23, and the hanger 2g can be small in size (suppressed increase in size) and the use of a conventional torque sensor can suppress manufacturing cost. In other words, in the case of a crankshaft having a larger diameter than a conventional crankshaft and a torque sensor sized accordingly, a new and large torque sensor is used. This may require an extremely large hanger and cause uncomfortable feeling. Moreover, a new torque sensor is necessary and thus may considerably increase the manufacturing cost. These problems do not arise in the present structure.

Furthermore, the metallic inner cylinder 28 is provided in the hanger 2g with the bearings 29 (29A, 29B) disposed in the two ends of the inner cylinder 28 so as to rotatably support the crankshaft body 17A. The inner cylinder 28 covers the torque sensor 23, the torque detection cylinder 24, and the region between the bearings 29 (29A, 29B) on the crankshaft body 17A. Even if rainwater enters the hanger 2g through the vertical pipe 2d, the inner cylinder 28 prevents rainwater from entering the location of the torque sensor 23, improving reliability. Moreover, the metallic inner cylinder 28 can prevent external noise from entering the signal lines (torque sensor connecting wires 32) of the torque sensor 23, also improving reliability. Furthermore, the locations of the crankshaft 17 and the torque sensor 23 can be combined into the unit covered with the inner cylinder 28. Thus, the crankshaft 17 and the torque sensor 23 can be relatively easily installed into the hanger 2g with high efficiency.

In this configuration, the auxiliary cylinder 30 is fit into one side of the hanger 2g (the left side in FIG. 4), the end of the inner cylinder 28 is fit into the auxiliary cylinder 30, and the annular elastic member 42 is disposed between the auxiliary cylinder 30 and the inner cylinder. With this configuration, even if the frame 2 including the hanger 9g is formed with low accuracy, the elastic member 42 automatically adjusts the position of the inner cylinder 28 so as to prevent the inner cylinder 27 from strongly coming into contact with the torque sensor 23 and adversely affecting the torque sensor 23, achieving higher reliability. Even if rainwater enters the hanger 2g through the vertical pipe 2d and then flows into the inner cylinder 28 (e.g., the location of the second bearing 29B) from the end of the inner cylinder 28 through a gap between the auxiliary cylinder 30 and the inner cylinder 28, the elastic member 42 blocks the flow of rainwater.

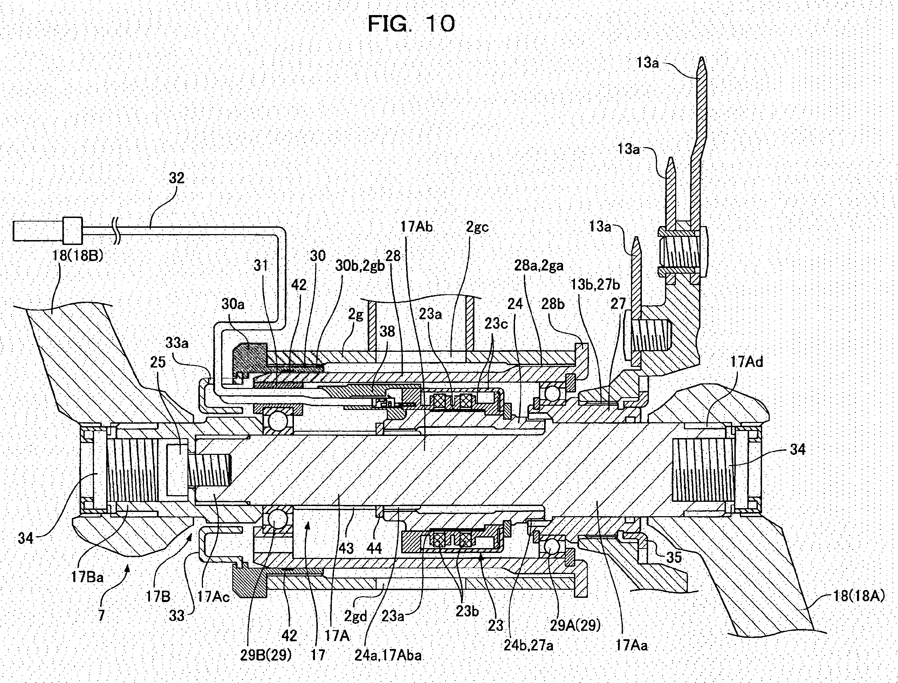

In this configuration, the tubular member 40 is fit onto the point, not exclusively, between the portion supported by the second bearing on the crankshaft 17 and the engaging portion 17Aba. For example, as shown in FIG. 10, the fit tubular member 40 may be replaced with a serration extended portion 43 that is formed by axially (to the left side in FIG. 10) extending a serration portion constituting the engaging portion 17Aba of the crankshaft 17. The end of the serration extended portion 43 is then brought into contact with the second bearing 29B. In FIG. 10, reference numeral 44 denotes a washer fit into a groove between the engaging portion 17Aba including the serration portion and the serration extended portion 43. The washer 44 regulates an axial movement of the torque detection cylinder 24.

Also in this configuration, the serration extended portion 43 regulates the position of the second bearing 29B so as to prevent an axial movement of the second bearing 29B. Thus, even if a large force is applied downward to the end of the crankshaft 17 according to a pedal force, this configuration can prevent damage and deformation on the portion supported by the second bearing 29B on the crankshaft 17, achieving higher reliability.

Since the serration extended portion 43 is formed on the point between the portion supported by the second bearing 29B on the crankshaft 17 and the engaging portion 17Aba, bending strength is higher than in the absence of the serration extended portion 43. Thus, even if a large force is applied downward to the end of the crankshaft 17, this configuration can prevent damage and deformation on the point between the portion supported by the second bearing 29B on the crankshaft 17 and the engaging portion 17Aba, achieving higher reliability.

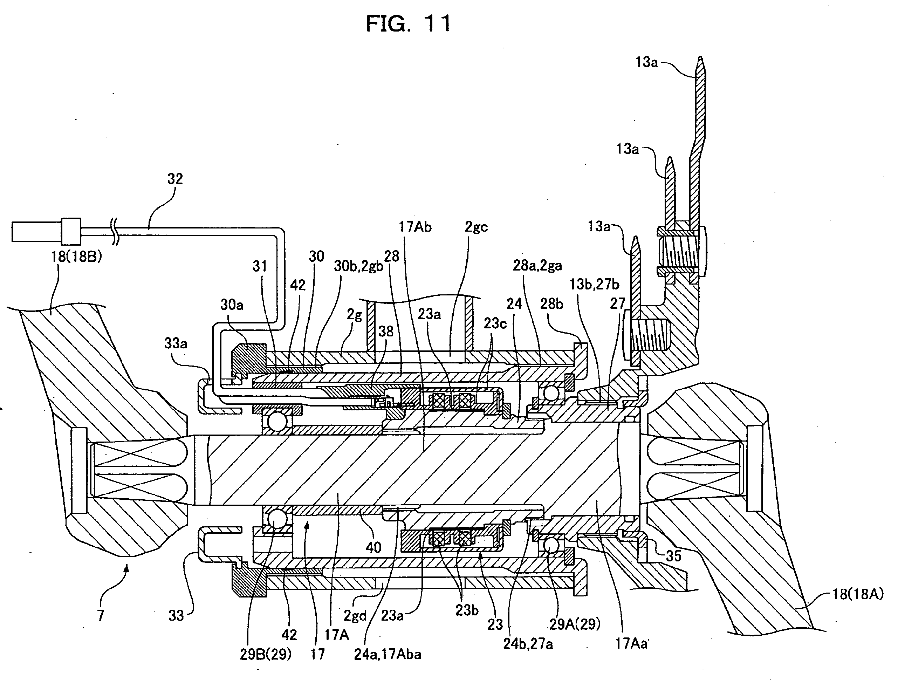

In the present embodiment, the crankshaft 17 is divided into, not exclusively, the crankshaft body 17A on the periphery of which the torque sensor 23 is provided, and the auxiliary crankshaft 17B connected to the one side of the crankshaft body 17A. As shown in FIG. 11, if the crankshaft 17 only includes the crankshaft body 17A, the tubular member 40 may be fit onto the crankshaft 17 (crankshaft 17) or the serration extended portion 43 may be formed on the crankshaft 17 as in the present embodiment. As a matter of course, this configuration can obtain the same effect of the tubular member 40 and the serration extended portion 43.

In the present embodiment, the transmission path of a human driving force between the crankshaft 17 and the crank gear 13 does not include a mechanism that does not transmit a rotary force, e.g., a one-way clutch. The present invention is preferably applied if a coaster brake operated by rotating the pedals in the opposite direction is disposed on the hub of the rear wheel. The present invention is not limited to the coaster brake and is also applicable to an ordinary brake, e.g., a drum brake operated by a brake lever provided on the handle bar.

In the present embodiment, the chain 15 is a driving force transmitting member that transmits a pedal force from the pedals 8 to the rear wheel 4. The present invention is not limited to the driving force transmitting member and thus the chain 15 may be replaced with a toothed belt. In the case of a toothed belt (driving force transmitting toothed belt), the crank gear 13 may be replaced with a driving front gear as a human driving force output ring for outputting a human driving force while the rear sprocket 14 may be replaced with a rear gear as a rear ring provided on the hub of the rear wheel.

### Industrial Applicability

The present invention is applicable to various electric bicycles that can be driven by adding an auxiliary driving force generated by an electric motor to a human driving force generated by a pedal force from a pedal.

## Claims

1. An electric bicycle that can be driven by adding an auxiliary driving force generated by an electric motor to a human driving force generated by a pedal force from a pedal,
the electric bicycle comprising:
a crankshaft (17) and
a torque detection cylinder (24) that is engaged with the crankshaft so as to receive a transmitted human driving force and has a magnetostriction portion (23a) of a torque sensor (23) on a periphery of the torque detection cylinder, the crankshaft and the torque detection cylinder being contained in a hanger connected to a lower end of a seat tube,
wherein an engaging portion (17Aba) between the crankshaft (17) and the torque detection cylinder (24) is disposed at an intermediate portion between a first bearing (29A) near a crank gear that rotatably supports the crankshaft and a second bearing (29B) opposite to the crank gear; **characterised in that**
a tubular member (40) is fit onto a point between a portion supported by the second bearing on the crankshaft and the engaging portion (17Aba) or, alternatively, a serration extended portion (43) is formed by axially extending a serration part (17Aba) constituting the engaging portion, and whereby
one of the tubular member and the serration extended portion is brought into contact with the second bearing and regulates an axial movement of the second bearing to the engaging portion.

2. The electric bicycle according to claim 1, wherein the crankshaft is divided into a crankshaft body (17A) on a periphery of which the torque sensor (23) is disposed, and an auxiliary crankshaft (7B) connected to one side of the crankshaft body, and
a joining section between the auxiliary crankshaft and a crank arm and a joining section between the crankshaft body and the crank arm are larger in diameter than a connecting section between the crankshaft body and the auxiliary crankshaft.

3. The electric bicycle according to one of claims 1 and 2, wherein the hanger (2) contains a metallic inner cylinder (28) having the first and second bearings (27) in left and right ends of the inner cylinder, and
the inner cylinder covers the torque sensor, the torque detection cylinder on the periphery of which the magnetostriction portion of the torque sensor is formed, and a region between the two bearings on the crankshaft.

4. The electric bicycle according to claim 3, further comprising an auxiliary cylinder (30) fit into one side of the hanger,
wherein an end of the inner cylinder (30) is fit into the auxiliary cylinder, and an annular elastic member (42) is disposed between the auxiliary cylinder and the inner cylinder.

## Patentansprüche

1. Ein elektrisches Fahrrad, das durch Hinzunahme einer Zusatzantriebskraft angetrieben werden kann, die von einem elektrischen Motor generiert wird, zusätzlich zu einer menschlichen Antriebskraft, die durch eine Pedalkraft von einem Pedal generiert wird,
das elektrische Fahrrad weist auf:
eine Kurbelwelle (17), und
ein Drehmomenterkennungszylinder (24), der im Eingriff mit der Kurbelwelle ist, um eine übertragene menschliche Antriebkraft zu empfangen mit einem Magnetostriktionsabschnitt (23a) eines Torsionssensors (23) an einer Peripherie des Drehmomenterkennungszylinders, die Kurbelwelle und der Drehmomenterkennungszylinder sind in einer Halterung untergebracht die mit einem unteren Ende eines Sitzrohrs verbunden ist,
wobei ein Eingreifabschnitt (17Aba) zwischen der Kurbelwelle (17) und dem Drehmomenterkennungszylinder (24) an einem Zwischenabschnitt zwischen einem ersten Lager (29A) in der Nähe eines Kurbelgangs, das drehbar die Kurbelwelle unterstützt, und einem zweiten Lager (29B), das gegenüber dem Kurbelgang ist, vorgesehen ist,
**dadurch gekennzeichnet, dass**
ein Rohrglied (40) an einem Punkt zwischen einem Abschnitt, der von dem zweiten Lager an der Kurbelwelle unterstützt ist und dem Eingreifabschnitt (17Aba), eingesetzt ist, oder alternativ dazu ein Verzahnungserweiterungsabschnitt (43) durch axiales Erweitern eines Verzahnungsabschnitts (17Aba), der den Eingreifabschnitt konstituiert, geformt ist, und wobei
das Rohrglied oder der Verzahnungserweiterungsabschnitt in Kontakt mit dem zweiten Lager gebracht wird und eine Axialbewegung des zweiten Lagers zum Eingreifabschnitt reguliert.

2. Da elektrische Fahrrad gemäß Anspruch 1, wobei die Kurbelwelle in einen Kurbelwellenkörper (17A) an einer Peripherie an der der Torsionssensors (23) vorgesehen ist und in eine Zusatzkurbelwelle (7B) eingeteilt ist, die mit einer Seite des Kurbelwellenkörpers verbunden ist, und
eine Verbindungssektion zwischen der Zusatzkurbelwelle und ein Kurbelarm und eine Verbindungssektion zwischen dem Kurbelwellenkörper und der Kurbelwellenarm größer im Durchmesser sind als ein Verbindungsabschnitt zwischen dem Kurbelwellenkörper und der zusätzlichen Kurbelwelle.

3. Das elektrische Fahrrad gemäß einem der Ansprüche 1 und 2, wobei die Halterung (2) einen metallischen Innenzylinder (28) mit dem ersten und zweiten Lager (29) an linken und rechten Enden des Innenzylinders aufweist, und
der Innenzylinder den Torsionssensor, den Drehmomenterkennungszylinder an der Peripherie an der der Magnetorestriktionsabschnitt des Torsionssensors geformt ist, und eine Region zwischen den zwei Lagern an der Kurbelwelle, abdeckt.

4. Das elektrische Fahrrad gemäß Anspruch 3, weiter aufweisend einen Zusatzzylinder (30), der in eine Seite der Halterung passt, wobei ein Ende des Innenzylinders (28) in den Zusatzzylinder gepasst ist, und ein ringförmiges elastisches Glied (42) zwischen dem Zusatzzylinder und dem Innenzylinder vorgesehen ist.

## Revendications

1. Bicyclette électrique pouvant être entraînée en ajoutant une force motrice auxiliaire générée par un moteur électrique à une force motrice humaine générée par une force de pédalage et provenant d'une pédale,
la bicyclette électrique comportant :
un axe de pédalier (17), et
un cylindre de détection de couple (24) en prise avec l'axe de pédalier de manière à recevoir une force motrice humaine transmise et comportant une partie magnétostrictive (23a) d'un capteur de couple (23) sur une circonférence du cylindre de détection de couple, l'axe de pédalier et le cylindre de détection de couple étant contenus dans un cadre relié à une extrémité inférieure d'un tube de selle,
où une partie d'engagement (17Aba) entre l'axe de pédalier (17) et le cylindre de détection de couple (24) est disposée dans une partie intermédiaire entre un premier palier (29A) à proximité d'un pédalier supportant l'axe de pédalier de manière rotative et un second palier (29B) faisant face au pédalier, **caractérisée en ce que**
un élément tubulaire (40) est fixé en un point entre une partie supportée par le second palier sur l'axe de pédalier et la partie d'engagement (17Aba) ou bien alternativement qu'une partie dentelée étendue (43) est formée en étendant axialement une partie dentelée (17Aba) formant la partie d'engagement, et où
l'un parmi l'élément tubulaire et la partie dentelée étendue est mis en contact avec le second palier et régule un mouvement axial du second palier par rapport à la partie d'engagement.

2. Bicyclette électrique selon la revendication 1, où l'axe de pédalier est divisé en un corps d'axe de pédalier (17A) sur la circonférence duquel est disposé le capteur de couple (23) et un axe de pédalier auxiliaire (17B) relié à un côté du corps d'axe de pédalier, et
une partie de liaison entre l'axe de pédalier auxiliaire et une manivelle et une partie de liaison ente le corps d'axe de pédalier et la manivelle ont un plus grand diamètre qu'une partie de raccordement entre le corps d'axe de pédalier et l'axe de pédalier auxiliaire.

3. Bicyclette électrique selon l'une des revendications 1 et 2, où le cadre (2) contient un cylindre intérieur métallique (88) comportant les premier et second paliers (29) à des extrémités gauche et droites du cylindre intérieur, et
le cylindre intérieur recouvre le capteur de couple, le cylindre de détection de couple, sur la circonférence duquel est formée la partie magnétostrictive du capteur de couple, et une zone entre les deux paliers sur l'axe de pédalier.

4. Bicyclette électrique selon la revendication 3, comportant en outre un cylindre auxiliaire (30) inséré dans un côté du cadre,
où une extrémité du cylindre intérieur (28) est insérée dans le cylindre auxiliaire et un élément élastique annulaire (42) est disposé entre le cylindre auxiliaire et le cylindre intérieur.
